# EUROPEAN PATENT APPLICATION

(11) **EP 4 354 679 A1**
(43) Date of publication of application: **17.04.2024**
(21) Application number: 23180066.5
(22) Date of filing: 19.06.2023
(51) Int. Cl.: H02B 11/167, H02B 3/00

(54) **ANTI-TIPPING DEVICE FOR WHEELED ELECTRICAL EQUIPMENT AND WHEELED ELECTRICAL EQUIPMENT**

(30) Priority: 12.10.2022 CN 202211249433
(71) Applicant: ABB Schweiz AG, 5400 Baden (CH)
(72) Inventor: WANG, ZhiAn, Xiamen, Fujian, 361006 (CN)
(74) Representative: Zimmermann & Partner Patentanwälte mbB

(57) **Abstract**

The present disclosure relates to an anti-tipping device for a wheeled electrical equipment and a wheeled electrical equipment. The anti-tipping device (200) comprises: a support (210) adapted to be mounted to the electrical equipment (100); a wheel mount (220) pivotally mounted to the support (210); and a roller device (230) mounted to the wheel mount (220) and comprising a roller (232); wherein the wheel mount (220) is movable between a folded position at which the wheel mount (220) is configured to be adjacent to the electrical equipment (100) and an unfolded position at which the wheel mount (220) is away from the electrical equipment (100) to enable the rollers (232) to roll relative to a support surface at a predetermined distance from the electrical equipment (100). In this way, auxiliary support may be provided for the electrical equipment, preventing or eliminating a toppling risk of the electrical equipment during movement process of the electrical equipment.

## Description

### FIELD

Embodiments of the present disclosure generally relate to wheeled electrical equipment, and more specifically to an anti-tipping device for the wheeled electrical equipment.

### BACKGROUND

Switch cabinets are widely used in power systems. The switch cabinet may comprise electrical equipment such as a wheeled circuit breaker. Such electrical equipment is generally upstanding and may comprise wheels for assisting movement. The electrical equipment may be moved into and out of the switch cabinet via movements of wheels. Taking a 40.5kV wheeled circuit breaker as an example, the main mass thereof lies in an epoxy pole and a contact arm located at an upper portion of the entire product structure. Such an arrangement results in a relatively high position of the center of gravity, so that the wheeled product, when pushed to move, has a tipping risk and increases a risk of damaging the operator. Therefore, there is a need to further improve the wheeled electrical equipment.

### SUMMARY

Embodiments of the present disclosure provide an anti-tipping device for a wheeled electrical equipment and a wheeled electrical equipment which aim to solve one or more of the above problems and other potential problems.

According to a first aspect of the present disclosure, there is provided an anti-tipping device. The anti-tipping device comprises: a support adapted to be mounted to an electrical equipment; a wheel mount pivotally mounted to the support; and a roller device mounted to the wheel mount and comprising a roller; wherein the wheel mount is movable between a folded position at which the wheel mount is configured to be adjacent to the electrical equipment and an unfolded position at which the wheel mount is away from the electrical equipment to enable the rollers to roll relative to a support surface at a predetermined distance from the electrical equipment. According to the anti-tipping device of the embodiment of the present disclosure, in the folded state, operation of the electrical equipment may not be hindered; and in the unfolded position, auxiliary support is provided for the electrical equipment, preventing or eliminating toppling risk of the electrical equipment during the movement process of the electrical equipment.

In some embodiments, the support may comprise: a first extension configured to be fixed to the electrical equipment at a bottom portion of the electrical equipment; and a second extension perpendicular to the first extension, the second extension configured to carry the wheel mount. Thereby, the anti-tipping device may be securely fixed to the electrical equipment.

In some embodiments, the wheel mount may be pivotally mounted to the support by a pivot shaft extending parallel to a surface of the second extension. Thereby, pivoting of the wheel mount may be achieved with a simple construction.

In some embodiments, the anti-tipping device may further comprise a retaining device. The retaining device is configured to apply a force to the wheel mount to retain the wheel mount in the folded position when the wheel mount is in the folded position. When the wheel mount is in the unfolded position, the retaining device applies a force to the wheel mount to retain the wheel mount in the unfolded position. Therefore, the anti-tipping device may be stabilized in the folded position and in the unfolded position.

In some embodiments, the retaining device may comprise a tension spring, one end of which is attached to the support and the other end of which is attached to the wheel mount. Thereby, the retaining device may be implemented with the tension spring.

In some embodiments, the support may further comprise a third extension. The third extension is disposed on a first side of the second extension, the roller device is mounted on a second side of the second extension opposite the first side, one end of the tension spring is attached to the third extension on the first side, and the other end of the tension spring is attached to the wheel mount on the second side. Thereby, the tension spring may be conveniently mounted.

In some embodiments, the tension spring is positioned such that a dead point of the tension spring is located between a first connection line and a second connection line, the first connection line is a line connecting a first attachment point between the tension spring and the support and a second attachment point between the tension spring and the wheel mount when the wheel mount is in the folded position, and the second connection line is a line connecting the first attachment point and the second attachment point when the wheel mount is in the unfolded position. Thereby, the retaining device may be implemented with a simple structure.

In some embodiments, the wheel mount may be mounted to the support at a location at which the wheel mount at least partially overlaps the support when the wheel mount is in the unfolded position to prevent continued rotation of the wheel mount from the unfolded position. Thereby, limitation of the wheel mount may be achieved with a simple structure.

In some embodiments, the wheel mount may pivot within an angular range of 0°-90°, wherein the wheel mount is at 0° angle to the electrical equipment when the wheel mount is in the folded position; when the wheel mount is in the unfolded position, the wheel mount is at 90° angle to the electrical equipment.

In some embodiments, the roller may be floatingly mounted to the wheel mount. Thereby, adaptability of the roller device, particularly in the case of the support surface being inclined, can be enhanced.

In some embodiments, the roller device comprises a fork pivotally mounted to the wheel mount; a roller pivotally mounted to the fork; and a spring disposed between the fork and the wheel mount to elastically support the fork.

In some embodiments, the roller device may further comprise: a guide slot disposed in the wheel mount; and a guide pin mounted on the fork and configured to be movable in the guide slot; wherein one end of the spring is mounted to the wheel mount and the other end of the spring is mounted to the guide pin.

According to a second aspect of the present disclosure, there is provided a wheeled electrical equipment. The wheeled electrical equipment comprises: a functional component; a carrier configured to carry the functional component; wheels mounted to the carrier to enable the wheeled electrical equipment to move; and at least one anti-tipping device for the wheeled electrical equipment according to any of the first aspect of the present disclosure, the anti-tipping device being mounted to said carrier.

In some embodiments, the wheeled electrical equipment may comprise a wheeled circuit breaker, a wheeled disconnector, or a wheeled meter.

### BRIEF DESCRIPTION OF THE DRAWINGS

The above and other objectives, features, and advantages of example embodiments of the present disclosure will become more apparent from the following detailed description with reference to the accompanying drawings. In the figures, several embodiments of the present disclosure are shown in an exemplary but unrestrictive manner.
Fig. 1 shows a side view of a wheeled electrical equipment according to one embodiment of the present disclosure.
Fig. 2 shows a perspective view of an anti-tipping device according to an embodiment of the present disclosure with a wheel mount in a folded state.
Fig. 3 shows a perspective view of an anti-tipping device according to an embodiment of the present disclosure with a wheel mount in an unfolded state.
Fig. 4 shows a schematic view of the anti-tipping device according to an embodiment of the present disclosure shown in Fig. 3 as viewed from another angle.
Fig. 5 shows a schematic view of an operation process of the anti-tipping device according to an embodiment of the present disclosure.
Fig. 6 shows a perspective view of a wheeled electrical equipment including the anti-tipping device according to an embodiment of the present disclosure with the wheel mount in a folded state.
Fig. 7 shows a perspective view of a wheeled electrical equipment including the anti-tipping device according to an embodiment of the present disclosure with the wheel mount in an unfolded state.

In all figures, the same or corresponding reference numbers denote the same or corresponding parts.

### DETAILED DESCRIPTION OF EMBODIMENTS

Preferred embodiments of the present disclosure will be described as follows in greater detail with reference to the drawings. Although preferred embodiments of the present disclosure are illustrated in the drawings, it is to be understood that the present disclosure described herein can be implemented in various manners, not limited to the embodiments illustrated herein. Rather, these embodiments are provided to make the present disclosure described herein clearer and more complete and convey the scope of the present disclosure described herein completely to those skilled in the art.

As used herein, the term "comprises" and its variants are to be read as open-ended terms that mean "comprises, but is not limited to." The term "or" is to be read as "and/or" unless the context clearly indicates otherwise. The term "based on" is to be read as "based at least in part on." The term "one example implementation" and "an example implementation" are to be read as "at least one example implementation." The term "another implementation" is to be read as "at least one other implementation." The terms indicating placement or positional relationship such as "up", "down", "front" and "rear" are based on the orientation or positional relationship shown in the figures, and are only for the convenience in describing the principles of the present disclosure, rather than indicating or implying that the designated elements must have a particular orientation, be constructed or operated in a particular orientation, and thus should not be construed as limiting the present disclosure.

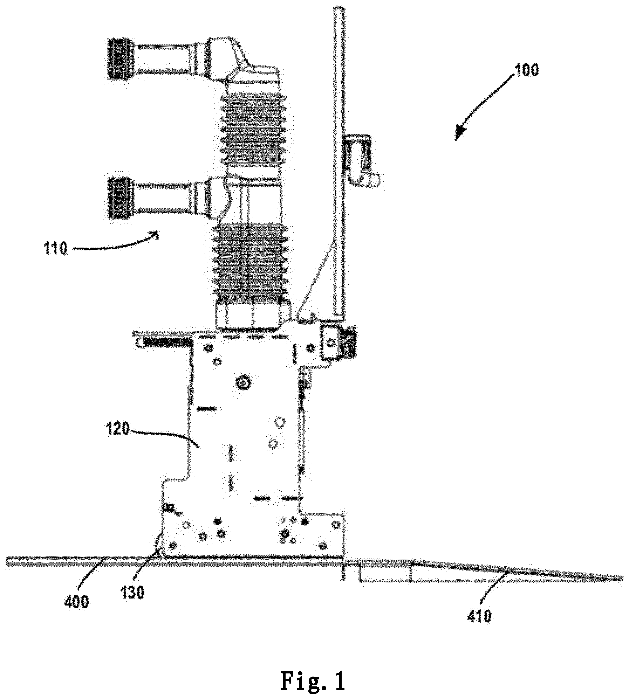

Fig. 1 shows a side view of a wheeled electrical equipment according to one embodiment of the present disclosure. In the illustrated embodiment, the wheeled electrical equipment is shown as a wheeled circuit breaker. As shown in Fig. 1, the wheeled electrical equipment 100 comprises: a functional component 110, a carrier 120, and a plurality of wheels 130 located at the bottom of the equipment.

The functional component 110 is a functional component of the electrical equipment. Where the wheeled electrical equipment 100 is a wheeled circuit breaker, the functional component may comprise an epoxy pole at an upper portion and a contact arm for making electrical contact with a corresponding component in a switch cabinet. The functional component may further comprise a pushing mechanism at an intermediate section. These functional components may be mounted on the carrier 120. It should be understood that the functional components may be corresponding functional components depending on the type of the electric equipment. As an example, in a case where the wheeled electrical equipment is a removable disconnector, the functional component may be a disconnector device and a corresponding actuating member; in a case where the wheeled electrical equipment is a meter, the functional component may be a measuring device and/or a processing device for measuring and/or analyzing an electrical parameter of the equipment.

The wheels 130 may be mounted to the carrier to assist movement of the electrical equipment. In some application scenarios, installation and/or maintenance of the electrical equipment may be accomplished by pushing and pulling the electrical equipment (e.g., the carrier 120) and moving the wheeled electrical equipment 100 (e.g., into and out of a switch cabinet) by rolling movements of the wheels 130.

For such a wheeled electrical equipment 100, a structural layout of the electrical equipment 100 makes its center of gravity relatively high, considering that its main mass is located at the upper part of the overall equipment structure, while the rollers are located at the bottom. When the electric equipment 100 is pushed to move, there is a risk that the main body of the equipment overturns. In a case where the ground surface is uneven, such as an inclined surface, the risk of tipping will be significantly increased. As shown in Fig. 1, the electrical equipment 100 may be moved on a support surface 400 by wheels 130. When the electrical equipment 100 moves onto the inclined surface 410, the electrical equipment 100 is extremely likely to lose its center of gravity and topple over due to the high center of gravity of the electrical equipment. This may not only cause damages to the equipment, but also there is a great risk of damaging the operator.

In view of the above, according to an embodiment of the present disclosure, there is provided an anti-tipping device for a wheeled electrical equipment. The anti-tipping device according to embodiments of the present disclosure is adapted to prevent and/or eliminate the above-mentioned tipping risk and easy to install and remove, without requiring any modification to the structure of conventional electrical equipment.

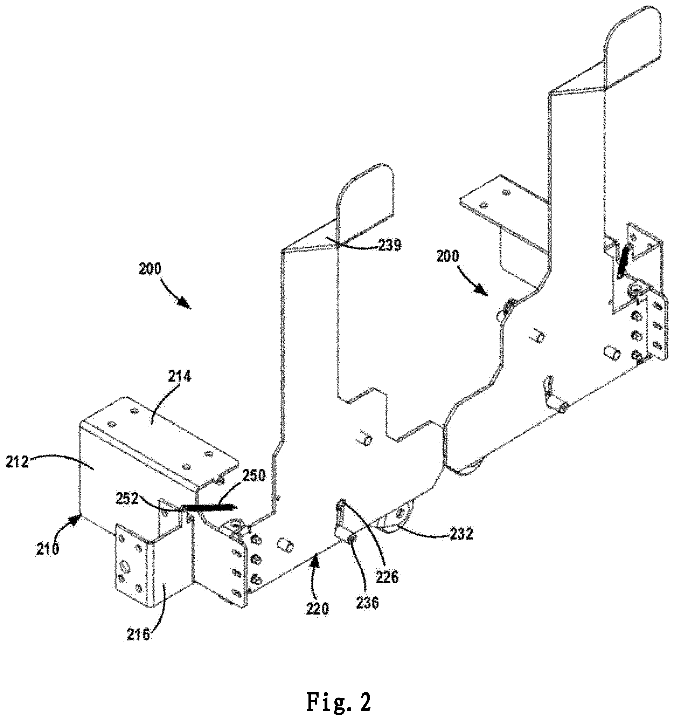

The anti-tipping device according to an embodiment of the present disclosure will be described in detail with reference to Fig.2 through Fig. 7. Although a wheeled circuit breaker is illustrated as an example of the wheeled electrical equipment in the illustrated embodiment, it should be understood that this is merely exemplary and that the wheeled electrical equipment according to embodiments of the present disclosure may be any other wheeled electrical equipment.

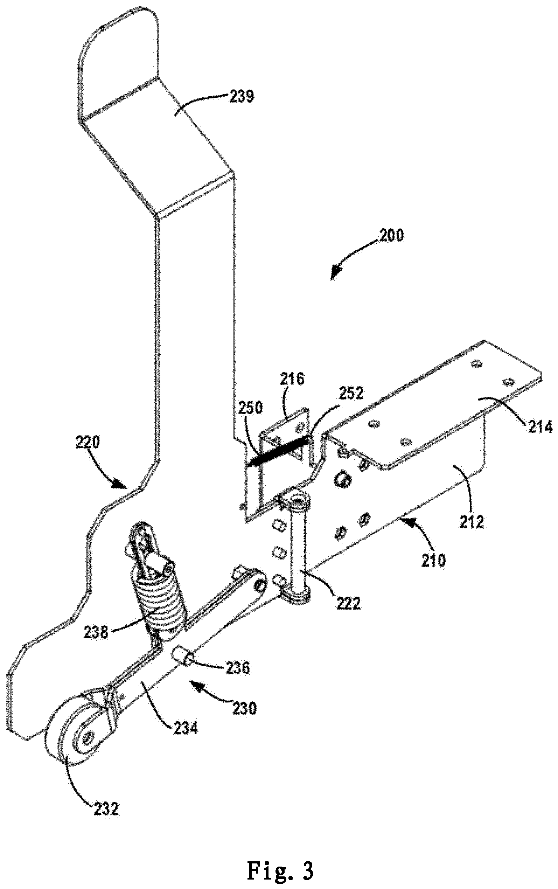

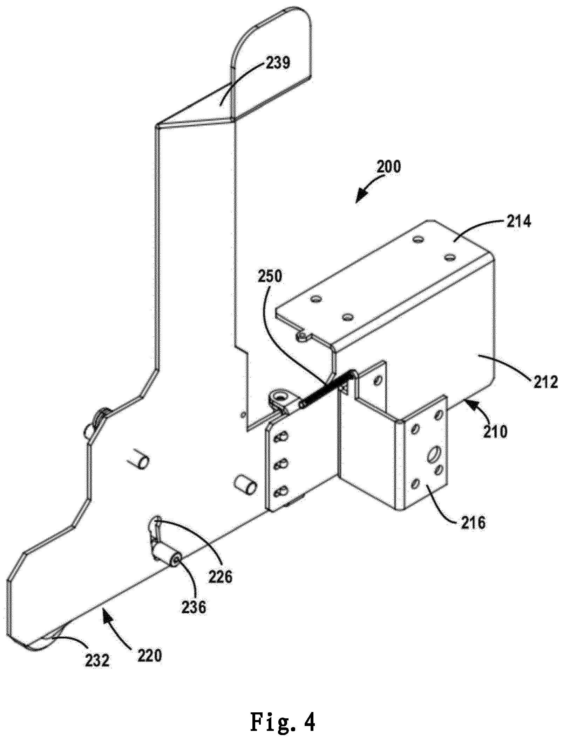

Fig. 2 through Fig. 4 show structural details of an anti-tipping device 200 according to an embodiment of the present disclosure. In the embodiment of Fig. 2, a pair of anti-tipping devices 200 is shown and is arranged in mirror symmetry. The two anti-tipping devices 200 have the same structure. An anti-tipping device 200 is shown in the embodiments of Fig. 3 and Fig. 4 from different view angles.

As shown in Fig. 2 through Fig. 4, the anti-tipping device 200 comprises a support 210, a wheel mount 220, and a roller device 230. The support 210 is mounted to the electrical equipment 100 to support the entire anti-tipping device 200. In some embodiments, the support 210 may be mounted to the electrical equipment at the bottom of the electrical equipment 100. In other embodiments, in some scenarios requiring lateral movement, instead of and/or in addition to the anti-tipping function, the anti-tipping device 200 may be mounted to lateral sides of the electrical equipment to provide additional support and/or movement functions.

The wheel mount 220 is configured to carry the roller device 230 and is pivotally mounted to the support 210. The wheel mount 220 may pivot between different positions to reduce space occupied by anti-tipping device 200. In some embodiments, the wheel mount 220 may be constructed of sheet material, thereby reducing the weight of anti-tipping device 200 and facilitating the layout of roller device 230.

The roller device 230 is mounted to the wheel mount 220. The roller device 230 may comprise a roller 232 and move on a support surface (e.g., a ground surface) via the roller 232. In some embodiments, the roller 232 may be directly and pivotally mounted to the wheel mount 220. In some embodiments, the roller 232 may be indirectly mounted to the wheel mount 220 via a fork. The roller 232 is pivotally disposed on the fork, which in turn is fixed to the wheel mount 220. In this case, maintenance of the anti-tipping device 200 can be eased; furthermore, there are also some additional benefits (described later).

The wheel mount 220 is movable between a folded position and an unfolded position. The folded position may correspond to a storage position of the anti-tipping device 200. When the wheel mount 220 is in the folded position, the wheel mount 220 together with the roller device is disposed adjacent to the electrical equipment 100, for example, disposed against a back plate of the electrical equipment 100. Thus, space occupied by the anti-tipping device 200 can be reduced. The unfolded position may correspond to an operating position of the anti-tipping device 200. The wheel mount 220 is configured to be remote from the electrical equipment 100 when the wheel mount 220 is at the operating position. In this case, the roller 232 of the roller device 230 provided on the wheel mount 220 may be at a predetermined distance away from the electrical equipment. Thus, additional support may be provided for the electrical equipment in a way that the roller is a location remote from the electrical equipment 100. By means of this additional support, stability of the electrical equipment can be significantly improved, reducing the tipping risk of the electrical equipment during movement.

The support 210 may be implemented in various ways as long as the anti-tipping device 200 can be conveniently mounted to an appropriate portion of the electrical equipment and is of a proper structural strength for supporting the entire anti-tipping device 200. In some embodiments, the support 210 may be formed as a sheet member. Thus, the weight of the anti-tipping device 200 can be reduced. In some embodiments, as shown in Figs. 2-4, the support 210 may comprise a first extension 214 and a second extension 212. The first extension 214 may extend in a first direction (in a horizontal direction in the illustrated embodiment). Thus, the first extension 214 can be conveniently fixed at the bottom of the electrical equipment. The second extension 212 may extend perpendicular to the first extension 214 (in a vertical direction in the illustrated embodiment). The second extension 212 is configured to carry the wheel mount 220. With the first extension 214 and the second extension 212 extending in different directions, there may be additional benefits, for example, a movement range of the wheel mount 220 may be conveniently set. In the illustrated embodiment, the first extension 214 and the second extension 212 are formed as sheets of material. It should be understood that this is merely exemplary. The first extension 214 and the second extension 212 may be formed in any other suitable shape.

In some embodiments, the wheel mount 220 is pivotally mounted to the support 210, e.g., to the second extension 212, by a pivot shaft 222. The pivot shaft 222 extends parallel to the surface of the second extension 212 (extends in the vertical direction in the illustrated embodiment). It should be understood that the illustrated pivotal engagement is merely exemplary. The pivotal engagement of the wheel mount 220 and the support 210 may comprise various implementations as long as reliable pivoting between the wheel mount 220 and the pivot shaft 222 is achieved.

In some embodiments, the anti-tipping device 200 may further comprise a pivot limiting device. As shown in Figs. 2-4, the wheel mount 220 may be mounted to the support 210 on one side of the support 210. When the wheel mount 220 is in the unfolded position, the wheel mount 220 and the support 210 at least partially overlap in the pivoting direction. Thus, the continued rotation of the wheel mount 220 may be restricted by the overlapping portion of the wheel mount 220 and the support 210.

The wheel mount 220 may comprise a vertically extending portion. When the wheel mount 220 is in the folded position, the vertically extending portion may abut against a portion of the electrical equipment to limit the pivoting angle of the wheel mount 220. It should be understood that the illustrated pivot restraining means is merely exemplary and that one skilled in the art may readily modify the shape of the wheel mount 220 and/or support 210 to achieve pivot restraint depending on the layout and operating position of the electrical equipment. In some embodiments, as shown in Fig. 2 through Fig. 4, the wheel mount 220 may further comprise a handle and/or a bend 239 that may facilitate a user to unfold or fold the wheel mount 220.

In some embodiments, the wheel mount 220 pivots within an angular range of 0°-90°, wherein the wheel mount 220 is at 0° angle to the electrical equipment 100 when the wheel mount 220 is in the folded position. When the wheel mount 220 is in the unfolded position, the wheel mount 220 is at 90° angle to the electrical equipment 100. The angular range is defined herein according to the positional relationship of the anti-tipping device 200 with respect to the electrical equipment. The 0° angle corresponds to a storage position of the anti-tipping device 200; the 90° angle may correspond to the operating position of the anti-tipping device 200 (i.e., the position of the auxiliary support).

In some embodiments, the roller 232 is floatingly mounted to the wheel mount 220. As used herein, the term "floating" means that the roller 232 is capable of moving relative to the wheel mount 220 in a force-receiving direction. This is particularly suitable for an uneven support surface. For example, when the electric equipment is moved on an inclined surface, since the roller can move in the vertical direction, it is possible to avoid unsmooth movement of the electrical equipment caused by incoordination between the movement height of the wheels of the electric equipment and the movement height of the roller 232.

In some embodiments, as shown in Fig. 3, the roller device 230 may comprise a fork 234 and a spring 238. The fork 234 is pivotally mounted to the wheel mount 220. The roller 232 is pivotally mounted to the fork 234. The spring 238 may be configured to limit the pivotal position of the fork. In this case, the roller 232 can be made adapt to the height change of the support surface by the swing of the fork 234.

In some embodiments, as shown in Fig. 3 and Fig. 4, the roller device 230 may further comprise a guide slot 226 and a guide pin 236. The guide slot 226 may be provided in the wheel mount 220. The guide pin 236 is mounted on the fork 234 and configured to move within the guide slot 226. The spring 238 may be secured between the wheel mount 220 and the fork 234 to resiliently support the fork. In some embodiments, the spring 238 may be implemented in the form of a compression spring. One end of the spring 238 is mounted to the wheel mount 220 and the other end of the spring 238 is mounted to the guide pin 236.

In some embodiments, the anti-tipping device may further comprise a retaining device. The retaining device is configured to apply a force to the wheel mount 220 to retain the wheel mount 220 in the folded position when the wheel mount 220 is in the folded position; with the wheel mount 220 in the unfolded position, the retaining device applies a force to the wheel mount 220 to retain the wheel mount 220 in the unfolded position. The anti-tipping device may be stabilized in the folded position and in the unfolded position by the retaining device.

The retaining device may be implemented in various ways. In some embodiments, the retaining device comprises a tension spring 250 having one end attached to the support 210 and the other end attached to the wheel mount 220. By means of the tension spring 250, the retaining device can be implemented in a simple manner.

In some embodiments, the retaining device may be implemented using only one tension spring 250. The tension spring 250 is positioned in a way that a pulling force can be applied to the wheel mount 220 no matter whether the wheel mount 220 is in the unfolded position or the folded position. In other embodiments, a plurality of tension springs (e.g., two tension springs) may be provided to perform the function of the retaining device.

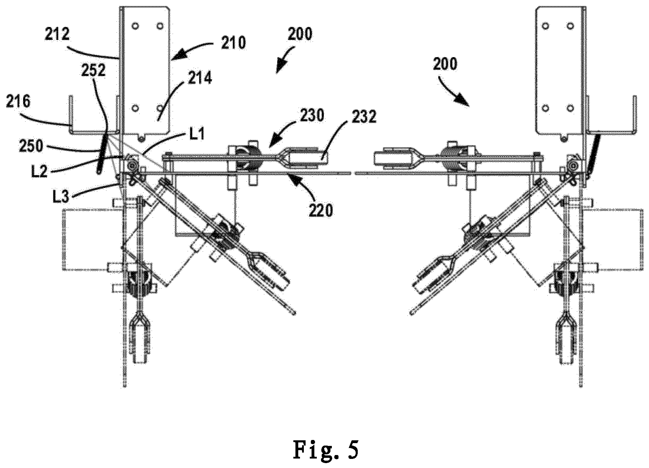

Fig. 5 shows a schematic view of a movement process of the wheel mount 220 from the folded position to the unfolded position. In the embodiment of Fig. 5, the folded position of the wheel mount 220 is shown in a solid line, and the unfolded position of the wheel mount 220 and an intermediate position from the folded position to the unfolded position are shown in a phantom line.

In the embodiment shown in Fig. 5, a dead point of the tension spring 250 corresponds to a line L2. A connection line L1 is a connection line connecting a first attachment point 252 between the tension spring 250 and the support 210 and a second attachment point 252 between the tension spring 250 and the wheel mount 220 when the wheel mount 220 is in the folded position, and the connection line L1 corresponds to a tension extension line of the tension spring when the wheel mount 220 is in the folded position. A connection line L3 is a connection line connecting the first attachment point 252 and the second attachment point when the wheel mount 220 is in the unfolded position, and the connection line L3 corresponds to a extension line of the tension spring when the wheel mount 220 is in the unfolded position. To ensure that the tension spring 250 can apply a tension force to the wheel mount 220 no matter whether the wheel mount 220 is in the unfolded position or the folded position, the dead point L2 of the tension spring 250 is located between the first connecting line L1 and the second connecting line L3. Here, the term "dead point" refers to an extension line of the tension spring when a tensile deformation amount of the tension spring is maximum.

In some embodiments, as shown in Fig. 2- Fig. 5, the support 210 may further comprise a third extension 216. The third extension 216 is disposed on a first side of the second extension 212, the roller device 230 is mounted on a second side of the second extension 212 opposite the first side, one end of the tension spring 250 is attached to the third extension 216 on a first side, and the other end of the tension spring 250 is attached to the wheel mount 220 on a second side. Thus, an attachment point for the tension spring 250 may be provided by the third extension 216. In some embodiments, the third extension 216 may be comprised of a sheet material. The third extension 216 may comprise a bend through which rigidity may be improved. Considering that the third extension 216 is subjected to the tension of the tension spring 250, the rigidity can be improved by the folded structure of the sheet material.

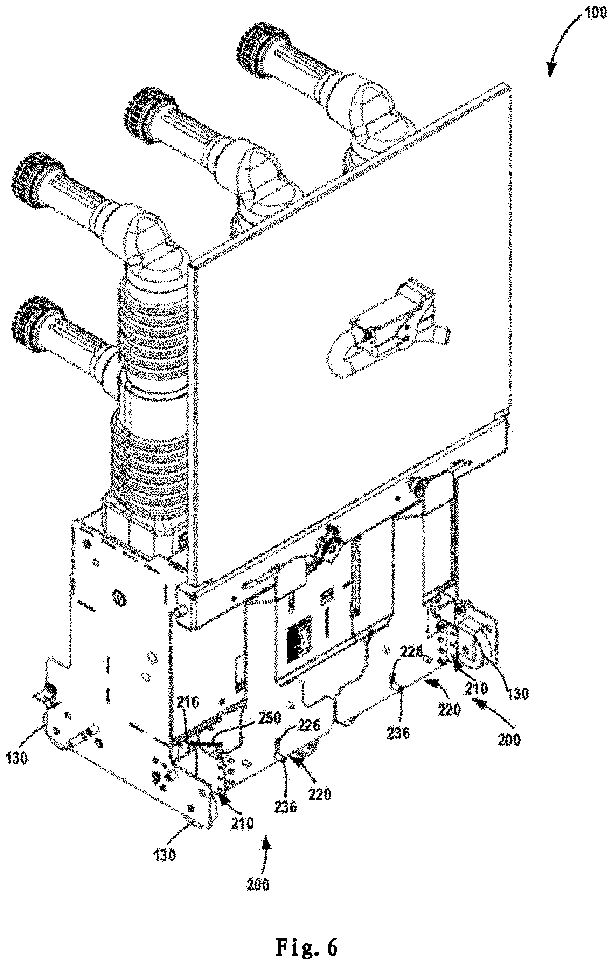

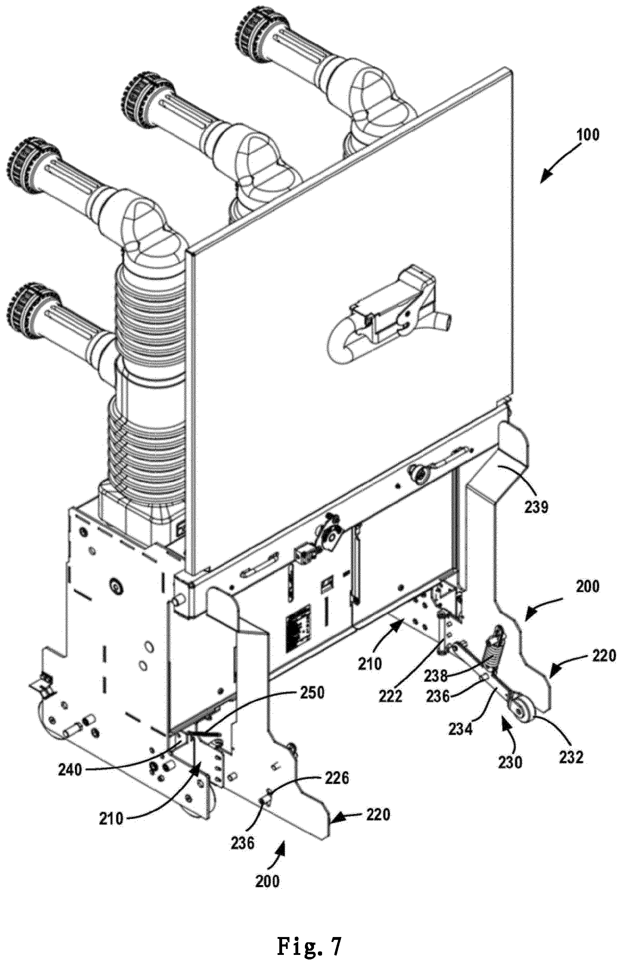

Fig. 6 and Fig. 7 show perspective views in which the anti-tipping device 200 is mounted to a wheeled electrical equipment 100 according to an embodiment of the present disclosure. The operation process of the anti-tipping device 200 according to an embodiment of the present disclosure will be described in detail with reference to Fig. 6 and Fig. 7.

As shown in Fig. 6, two anti-tipping devices 200 in a mirror symmetrical in a left-right direction are mounted to the electrical equipment 100. The wheel mount 220 is in a folded state corresponding to a storage state of the anti-tipping device 200. At this time, the stored anti-tipping device 20 abuts against the electrical equipment. In the illustrated embodiment, the stored anti-tipping device 20 abuts against a cross beam and a breaker mechanism panel. Therefore, the normal operation of the circuit breaker is not hindered; for example, the closing of the cabinet door will not be interfered in a state that the circuit breaker is mounted in the switch cabinet.

As shown in Fig. 7, when the electrical equipment 100 needs to be moved, for example, when the electrical equipment 100 needs to be moved out of the switch cabinet, the user may unfold the anti-tipping device 200 to make the wheel mount 220 in an unfolded state. At this time, the anti-tipping device 200 enters an operation preparation state, and the roller of the anti-tipping device 200 may serve as an auxiliary support to prevent the circuit breaker from toppling when the entire electric equipment is pulled out of the switch cabinet. As shown in Fig. 7, when the wheel mount 220 is in the unfolded state, the roller 232 is disposed at a distance from the mobile electrical equipment 100, and the stability of the electrical equipment 100 may be significantly improved by providing a support point through the roller. The roller 232 of the anti-tipping device 200 assists in supporting the electrical equipment 100. When the roller 130 of the electric equipment moves, the roller 232 also moves at the same time, whereby the tilting of the electric equipment can be effectively prevented.

When the support surface 142 is an inclined surface, since the roller 232 is floatingly disposed, contact position of the roller 232 relative to the support surface 142 can be adjusted. The wheels of the electrical equipment cannot be flexibly adjusted; with the rollers 232 being floatingly supported, the distance between the rollers 232 and the wheels 130 of the electrical equipment varies in a direction perpendicular to the supporting surface. In a solution in which the roller 232 is rigidly provided, when the electric equipment moves downward from an inclined slope, there is another risk that the outside roller of the electric equipment is suspended and the center of gravity of the electric equipment moves forward to cause the roller to be excessively loaded, or there is a case that the rollers 232 of the anti-tipping device 200 are suspended and do not function. In the disclosed embodiment, as the roller 232 descends along the inclined surface, the guide pin 236 on the fork 234 slides in a slot 226 (e.g., an arcuate slot) on the wheel mount 220 and compresses the spring 238 to adjust the distance of the roller 232 and wheel 232 in the direction perpendicular to the supporting surface to ensure that the wheel of the electrical equipment remains in contact with the ground. Thereby, the safety is further improved.

It should be understood that although in the illustrated embodiment, two anti-tipping devices 200 symmetrical in the left-right direction are shown, this is merely exemplary. In other embodiments, the number of anti-tipping devices 200 may be one or more. In this case, the anti-tipping device 200 according to an embodiment of the present disclosure can still function.

Further, while operations are depicted in a particular order, this should not be understood as requiring that such operations are performed in the particular order shown or in sequential order, or that all illustrated operations are performed to achieve the desired results. In certain circumstances, multitasking and parallel processing may be advantageous. Likewise, while several specific implementation details are contained in the above discussions, these should not be construed as limitations on the scope of the subject matter described herein, but rather as descriptions of features that may be specific to particular implementations. Certain features that are described in the context of separate implementations may also be implemented in combination in a single implementation. Rather, various features described in a single implementation may also be implemented in multiple implementations separately or in any suitable sub-combination.

Although the subject matter has been described in language specific to structural features and/or methodological acts, it is to be understood that the subject matter specified in the appended claims is not necessarily limited to the specific features or acts described above. Rather, the specific features and acts described above are disclosed as example forms of implementing the claims.

The descriptions of the various embodiments of the present invention have been presented for purposes of illustration, but are not intended to be exhaustive or limited to the embodiments disclosed. Many modifications and variations will be apparent to those of ordinary skill in the art without departing from the scope and spirit of the described embodiments. The terminology used herein was chosen to best explain the principles of the embodiments, the practical application or technical improvement over technologies found in the marketplace, or to enable others of ordinary skill in the art to understand the embodiments disclosed herein.

## Claims

1. An anti-tipping device (200) for a wheeled electrical equipment (100), comprising:
a support (210) adapted to be mounted to the electrical equipment (100);
a wheel mount (220) pivotally mounted to the support (210); and
a roller device (230) mounted to the wheel mount (220) and comprising a roller (232);
wherein the wheel mount (220) is movable between a folded position at which the wheel mount (220) is configured to be adjacent to the electrical equipment (100) and an unfolded position at which the wheel mount (220) is away from the electrical equipment (100) to enable the rollers (232) to roll relative to a support surface at a predetermined distance from the electrical equipment (100).

2. The anti-tipping device according to claim 1, wherein the support (210) comprises:
a first extension (214) configured to be fixed to the electrical equipment (100) at a bottom portion of the electrical equipment (100); and
a second extension (212) perpendicular to the first extension, the second extension (212) configured to carry the wheel mount (220).

3. The anti-tipping device according to claim 1 or 2, wherein the wheel mount (220) is pivotally mounted to the support (210) by a pivot shaft (222) extending parallel to a surface of the second extension (212).

4. The anti-tipping device according to claim 1, 2 or 3, further comprising a retaining device configured to:
apply a force to the wheel mount (220) to retain the wheel mount (220) in the folded position when the wheel mount (220) is in the folded position;
apply a force to the wheel mount (220) to retain the wheel mount (220) in the unfolded position when the wheel mount (220) in the unfolded position.

5. The anti-tipping device according to claim 4, wherein the retaining device comprises a tension spring (250) one end of which is attached to the support (210) and the other end of which is attached to the wheel mount (220).

6. The anti-tipping device according to claim 5, wherein the support (210) further comprise a third extension (216),
the third extension (216) is disposed on a first side of the second extension (212),
the roller device (230) is mounted on a second side of the second extension (212) opposite the first side, and
one end of the tension spring (250) is attached to the third extension (216) on the first side, and the other end of the tension spring (250) is attached to the wheel mount (220) on the second side.

7. The anti-tipping device according to claim 5 or 6, wherein the tension spring (250) is positioned such that a dead point of the tension spring (250) is located between a first connection line and a second connection line,
the first connection line is a line connecting a first attachment point between the tension spring (250) and the support (210) and a second attachment point between the tension spring (250) and the wheel mount (220) when the wheel mount (220) is in the folded position, and
the second connection line is a line connecting the first attachment point and the second attachment point when the wheel mount (220) is in the unfolded position.

8. The anti-tipping device according to any of claims 1-7, wherein the wheel mount (220) is mounted to the support (210) at a location at which the wheel mount (220) at least partially overlaps the support (210) when the wheel mount (220) is in the unfolded position to prevent continued rotation of the wheel mount (220) from the unfolded position.

9. The anti-tipping device according to any of the preceding claims, wherein the wheel mount (220) pivots within an angular range of 0°-90°, wherein the wheel mount (220) is at 0° angle to the electrical equipment (100) when the wheel mount (220) is in the folded position and when the wheel mount (220) is in the unfolded position, the wheel mount (220) is at 90° angle to the electrical equipment (100).

10. The anti-tipping device according to any of claims 1-9, wherein the roller (232) is floatingly mounted to the wheel mount (220).

11. The anti-tipping device according to claim 10, wherein the roller device (230) comprises:
a fork (234) pivotally mounted to the wheel mount (220);
a roller (232) pivotally mounted to the fork (234); and
a spring (238) disposed between the fork (234) and the wheel mount (220) to elastically support the fork (234).

12. The anti-tipping device according to claim 11, wherein the roller device (230) further comprises:
a guide slot (226) disposed in the wheel mount (220); and
a guide pin (236) mounted on the fork (234) and configured to be movable in the guide slot (226);
wherein one end of the spring (238) is mounted to the wheel mount (220) and the other end of the spring is mounted to the guide pin (236).

13. A wheeled electrical equipment (100), comprising:
a functional component (110);
a carrier (120) configured to carry the functional component (110);
wheels (130) mounted to the carrier to enable the wheeled electrical equipment (100) to move; and
at least one anti-tipping device (200) for the wheeled electrical equipment (100) according to any of claims 1-12, the anti-tipping device being mounted to said carrier (120).

14. The wheeled electrical equipment (100) according to claim 13, wherein the wheeled electrical equipment (100) comprises a wheeled circuit breaker, a wheeled disconnector, or a wheeled meter.
